# EUROPEAN PATENT SPECIFICATION

(11) **EP 1 808 366 B1**
(45) Date of publication and mention of the grant of the patent: **11.04.2012**
(21) Application number: 06126996.5
(22) Date of filing: 22.12.2006
(51) Int. Cl.: B62H 5/00, B62H 5/02, B60K 15/05, B60R 25/02, E05B 65/12

(54) **Vehicular lock device**
Vorrichtung zur Fahrzeugverriegelung
Dispositif de verrouillage de véhicule

(30) Priority: 27.12.2005 JP 2005374793
(43) Date of publication of application: 18.07.2007
(73) Proprietor: HONDA MOTOR CO., LTD., Tokyo (JP)
(72) Inventor: Hirose, Yoshihisa,c/o HONDA R&D CO., LTD., SAITAMA Saitama 351-0193 (JP); Boonsuk, Ekkawit c/o HONDA R&D SOUTHEAST ASIA CO.,LTD., Bangkok (TH); Hara, Hirokazu c/o HONDA R&D CO., LTD., SAITAMA Saitama 351-0193 (JP); Imada, Norihiro c/o HONDA R&D CO., LTD., SAITAMA Saitama 351-0193 (JP)
(74) Representative: Quinterno, Giuseppe

(56) References cited:
- JP-A- 3 284 490
- JP-A- 2001 206 198
- JP-A- 2002 205 670
- JP-A- 2003 089 370
- JP-A- 2005 088 802
- US-A- 5 291 067
- US-A1- 2001 030 438

## Description

The present invention relates generally to vehicular lock devices and in particular to a vehicular lock device of the kind defined in the preamble of claim 1.

A vehicular lock device of that kind is disclosed in JP-2003-089370A.

It is an object of the present invention to provide an improved vehicular lock device of the above-defined kind.

This and other objects are achieved according to the present invention by the vehicular lock device defined in claim 1. The vehicular lock device according to the present invention is characterized in that the operating unit includes an operating arm which is swingable about a pivot shaft in accordance with the operation of the operating unit; the operating arm is configured to enable opening operation of the open-close type seat by being swung toward one side from a neutral state where the operating unit is not operated, and to enable opening operation of the open-close type lid by being swung toward the other side from the neutral state; and in that the vehicular lock device further includes a lock mechanism that prohibits the opening operation of open-close type seat and open-close type lid by turning the key cylinder to a predetermined position.

The present invention is further characterized in that the lock mechanism is a mechanism which maintains the operating arm in the neutral state.

The present invention is further characterized by including a cam which is turnable integrally with the key cylinder and a lock pin which projects along with the turning of the cam and in that engagement of the lock pin with an engaging hole provided in the operating arm maintains the operating arm in the neutral state.

The present invention is still further characterized in that the lock mechanism is configured to release the linkage between the operating arm and the wire.

The present invention is further characterized by including a driving arm which comes into abutment against the pressing plate to be swung for the wire-drive; a cam turned integrally with the key cylinder; the pressing plate which is slidably moved along the pivot shaft of the operating arm as the cam is turned; and in that the pressing plate allows the operating arm to be slidably moved along the pivot shaft, which causes no abutment between the operating arm and the driving arm.

The present invention is further characterized in that the lock position is a position where handlebar-operation of the vehicle is prohibited by the handlebar lock device.

The present invention is further characterized in that the combination switch is provided with a shutter which shields a key hole into which a key is inserted to turn the key cylinder; a cover member formed with the key hole is disposed above the shutter; and the operating unit is attached to the cover member.

According to the invention, since the operating unit for operating the open-close mechanism is integrally attached to an operating device including a key cylinder, the open-close mechanism can be operated from the vicinity of the key cylinder. Consequently, the operability of the open-close mechanism can be significantly enhanced without considerable modification of the key cylinder.

Furthermore, since the operating portion of the key cylinder is separated from the operating portion of the operating unit, erroneous operation can be prevented and the operability can be further enhanced.

According to the invention, the vehicular lock device enables opening operation of the open-close type seat and the open-close type lid through the wire-drive. Since the wire-drive is achieved by only simple mechanical parts, the fabrication processes can be reduced compared with the configuration using an electromagnetic mechanism such as a solenoid. Further, since the key cylinder, the handlebar lock device and the operating unit are formed integrally with each other, a vehicular lock device can be provided in which a plurality of functions and operating portions are collected in one place.

According to the invention, one operating arm is pivotally moved in an arbitrary swing direction to select the open-close type seat or the open-close type lid, thereby enabling the corresponding opening operation. In addition, the vehicular lock device can be provided which can optionally prohibit the opening operation of the open-close type seat and the open-close type lid by operating the key cylinder. According to another aspect of the invention, since the swing movement of the operating arm is forcibly prohibited by fixedly supporting it, the vehicular lock device can be provided which can prohibit the opening operation of the open-close type seat and the open-close type lid.

According to a further aspect of the invention, since the lock mechanism is realized by a simple configuration using a cam and a lock pin, fabrication processes can be reduced.

According to still another aspect of the invention, there is provided a vehicular lock device in which, even if the operating arm is swung, the open-close type seat and the open-close type lid cannot be opened, that is, the opening operation can be virtually prohibited.

According to a still further aspect of the invention, since the lock mechanism is realized by a simple mechanism including a cam and a pressing plate, fabrication processes can be reduced. Since the engagement of the operating arm with the driving arm is released during the operation of the lock mechanism, the operating arm is operated in vain, which eliminates a burden imposed on the engaging portion.

According to another aspect of the invention, there is provided a vehicular lock device that prohibits the opening operation of the open-close seat and the open-close lid in conjunction with the operation of the handlebar lock device which is frequently used when an occupant dismounts from the vehicle.

According to a further aspect of the invention, there is provided a vehicular lock device in which a key cylinder, the handlebar lock device and the operating unit are integrally formed and the key cylinder is protected by a shutter for shielding a key hole. Since the operating unit is attached to the cover member, sub-assembling operation can be enabled, thereby reducing the working processes during assembly.

Further features and advantages of the invention will become apparent from the description which follows with reference to the accompanying drawings wherein:
Fig. 1 is a side view of a motorcycle to which a vehicular lock device according to an embodiment of the present invention is applied;
Fig. 2 is a front view of a lid according to an embodiment of the present invention;
Fig. 3 is a front view of a hinge structure according to an embodiment of the present invention;
Fig. 4 is a plan view of the hinge structure of the embodiment of the invention;
Fig. 5 is a schematic explanatory view of a lid lock structure according to an embodiment of the present invention;
Fig. 6 is a front view of a seat lock structure according to an embodiment of the present invention;
Fig. 7 is a perspective view of a complex key cylinder unit according to an embodiment of the present invention;
Fig. 8 is a perspective view of an operating unit according to an embodiment of the present invention;
Fig. 9 is an exploded perspective view of the complex key cylinder unit according to the embodiment of the invention;
Fig. 10 is a front view illustrating the inside of the operating unit according to the embodiment of the invention;
Fig. 11 is a plan view illustrating the relationship between an operating arm lock structure and an operating arm according to the embodiment of the invention;
Fig. 12 is an exploded perspective view of a shutter mechanism according to an embodiment of the present invention;
Fig. 13 is a plan view illustrating the operating state of the shutter mechanism according to the embodiment of the invention;
Fig. 14 is an exploded perspective view of a complex key cylinder unit according to a second embodiment of the present invention;
Fig. 15 is a front view illustrating the inside of an operating unit according to the second embodiment of the invention; and
Fig. 16 is a plan view of an engaging-object switching structure according to the second embodiment of the invention.

Preferred embodiments of the present invention will hereunder be described in detail with reference to the drawings.

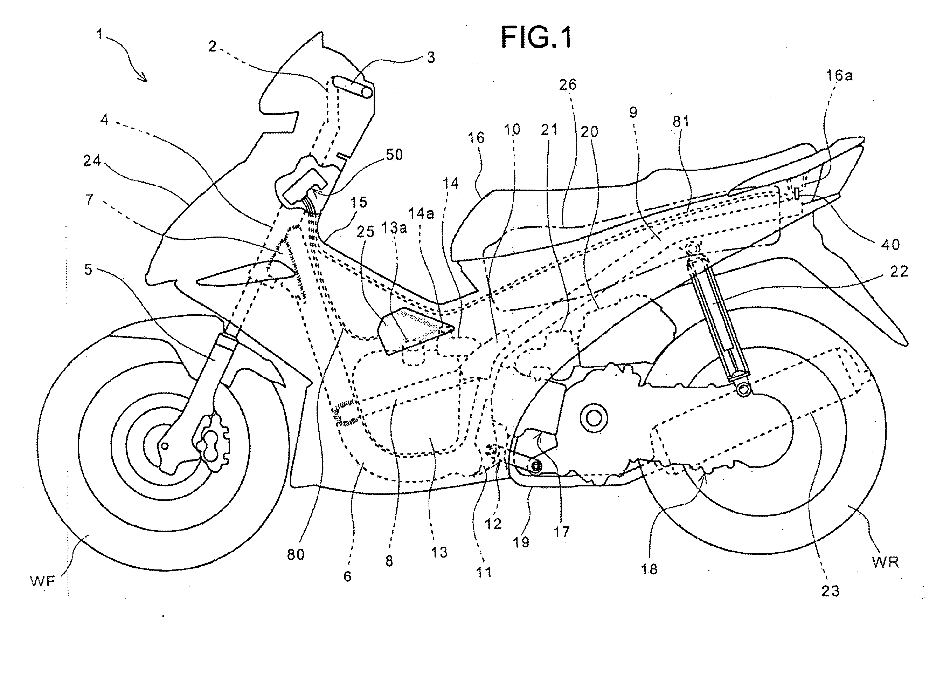

Fig. 1 is a side view of a motorcycle according to an embodiment of the present invention. The motorcycle 1 is a scooter type motorcycle having a unit swing type power unit incorporating a continuously variable transmission. A head pipe 4 and gussets 7 as reinforcing members are fixedly joined to a pair of left and right main frames 6. A front wheel WF is rotatably supported by the lower ends of a pair of left and right front forks 5 supported by the head pipe 4. The front forks 5 are made steerable by handlebars 2 and handle grips 3 attached to the handlebars 2. The handlebars 2 are connected to a stem shaft (not shown) rotatably supported inside the tubular head pipe 4. The main frame 6 is bent to be almost U-shaped on the lower side of a vehicle body and joined to a seat frame 9 extending to the rear portion of the vehicle body. A plate 12 adapted to support a power unit 18 described later is attached to a gusset 11 joined to the lower portion of the main frame 6. The main frame 6 and the seat frame 9 are also connected by one of a pair of left and right sub frames 8 through a gusset 10 disposed at the almost central portion of the vehicle body. A fuel tank 13 with a filler opening 13a is disposed so as to be put between the sub frames 8. A cooling water reservoir tank 14 with a water intake 14a is disposed near the fuel tank 13.

The power unit 18 incorporating an engine 17, a carburetor 21, and an air cleaner box 20 is supported by the plate 12 whose one end is pivotally secured to the gusset 11. The power unit 18 is suspended by a rear cushion 22 attached to the seat frame 9 so as to be swingable about one end of the plate 12 serving as a pivot shaft. A rear wheel WR is rotatably supported by the rear end of the power unit 18 serving as a driving wheel. An exhaust pipe 19 has one end connected to an exhaust port (not shown) provided in a cylinder head of the engine 17 and the other end connected to a muffler 23 disposed on the rear side of the vehicle body.

A seat 16 on which an occupant or occupants seat is disposed on the seat frames 9. The seat 16 is configured to be openable about a pivot shaft (not shown) provided at its front end so that an occupant can access a storage space 26 for a helmet and the like formed below the seat 16. An almost U-shaped lock member 16a is attached to the rear end side back surface of the seat 16 so as to be engageable with a seat lock structure 40 secured fixedly to the seat frame 9.

The lock member 16a and the seat lock structure 40 are configured to keep the seat 16 closed unless an occupant or the like operates to unlock the lock.

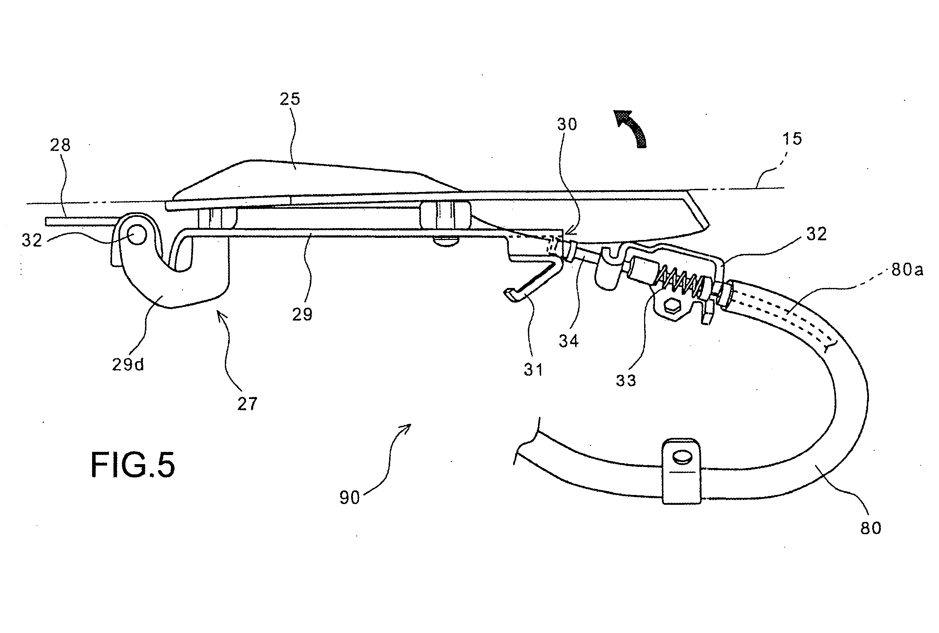

Meanwhile, while a front cover 24 covers the vehicle body from the front thereof, a cover panel 15 covers the head pipe 4 from the rear side of the vehicle body. In addition, a lid 25 is provided on the cover panel 15 as an open/close cover used to access the filler opening 13a of the fuel tank 13 and the water intake 14a of the reservoir tank 14. The lid 25 is constructed to be openable and closable about a pivot shaft (see Fig. 5) provided on the front side of the vehicle body. In addition, the lid 25 is also constructed to maintain its closed and locked state unless an occupant or the like operates to unlock the lock.

A complex key cylinder unit 50 as a vehicular lock device according to the present invention is disposed on the right-hand side of the head pipe 4 positioned at the widthwise center of the vehicle. Cables 80, 81 incorporating slidable wires are each connected at one end thereof to the complex key cylinder unit 50 and at the other end to a corresponding one of the vicinities of the seat lock structure 40 and the lid 25. With the configuration described above in the motorcycle 1 of the embodiment, the locks of the seat 16 and the lid 25 can be unlocked by the operation of the complex key cylinder unit 50. The cables 80, 81 can be arranged on the inside or outside of the exterior components of the vehicle body.

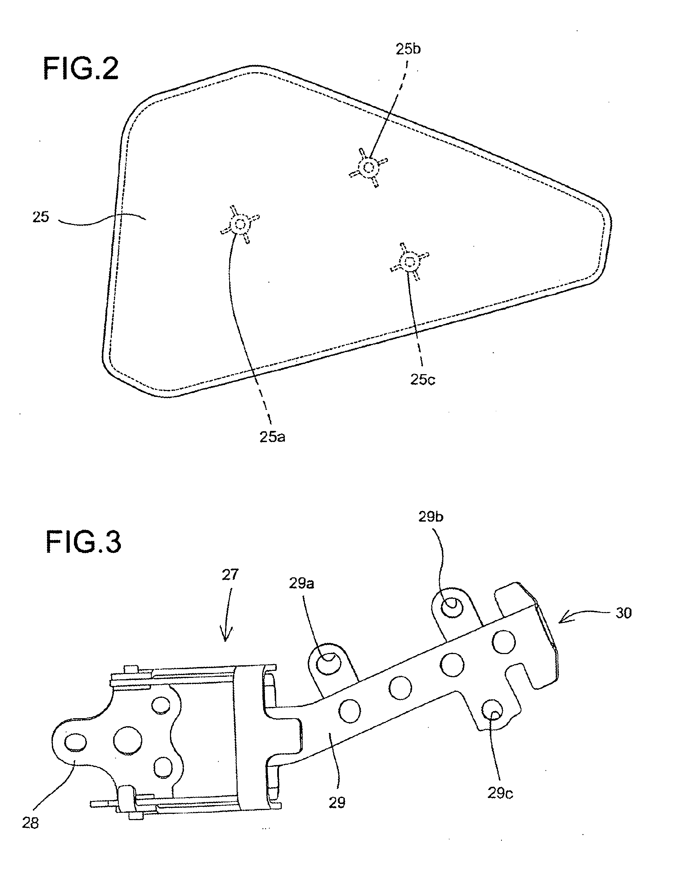

Fig. 2 is a front view of the lid 25 illustrated in Fig. 1. The lid 25 is openable about its front side with respect to the vehicle body. In addition, the lid 25 is shaped to be smaller in vertical width as it goes rearward of the vehicle body so that it can cover, with its minimum area, the filler opening 13a and the water intake 14a having a smaller diameter than the filler opening 13a (see Fig. 1). Further, the lid 25 is made of resin or the like and formed with attachment bosses 25a, 25b, and 25c on its rear surface.

Fig. 3 is a front view of a hinge structure 27 adapted to connect the cover panel 15 (see Fig. 1) with the lid 25 (see Fig. 2). The hinge structure 27 made of a thin steel plate or the like includes a base portion 28 fixedly supported by the rear surface of the cover panel 15 and an arm portion 29 adapted to fixedly support the lid 25. The arm portion 29 is formed with attachment holes 29a, 29b, 29c through which screws or the like pass, the screws or the like having threaded engagement with the attachment bosses 25a, 25b, 25c of the lid 25. The arm portion 29 is formed at its tip with an engagement portion 30 with a recess into which an engaging pin described later (see Fig. 5) is inserted.

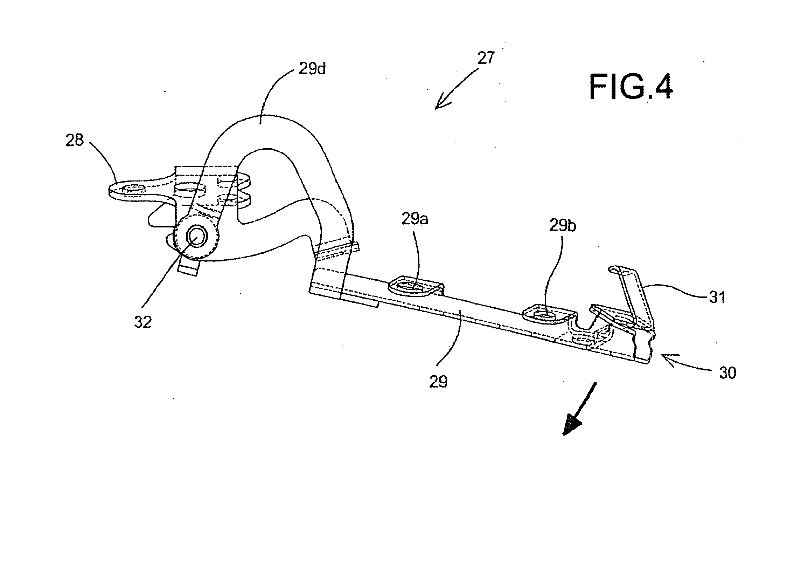

Fig. 4 is a plan view of the hinge structure 27. Like reference numerals denote like or corresponding portions. The base portion 28 and the arm portion 29 constituting the hinge structure 27 are connected by a shaft 32 so that the arm portion 29 can freely turn about the shaft 32 as a pivot shaft in the direction of an arrow illustrated in the figure. The arm portion 29 is provided with a curved portion 29d in order to prevent the interference between the surface of the cover panel 15 and the lid 25 when the lid 25 is opened. Thus, the lid 25 can be opened at a large deployable angle with respect to the surface of the cover panel 15, so that it can be prevented from interfering with a filling nozzle during filling operation. The engagement portion 30 is configured to form a recessed portion which can receive therein and retain an engaging pin described later by forming the tip of the arm portion 29 into a near-U shape and joining an elastic member 31 to its opening end portion.

Fig. 5 is a schematically explanatory diagram of a lid lock structure 90 as an open/close mechanism including the lid 25, the hinge structure 27 and the cable 80. Like reference numerals denote like or corresponding portions. In the figure, closing the lid 25 causes a locked state in which the lid 25 and the cover panel 15 form an integral surface. A holder 32 is disposed in the vicinity of the engagement portion 30 at the tip of the arm portion 29 in order to fixedly support, on the vehicle body side, the cable 80 connected to the complex key cylinder unit 50. In the embodiment, if the wire 80a incorporated in the cable 80 is pulled by the operation of the complex key cylinder unit 50, the engaging pin 34 connected to the tip of the wire 80a is moved toward the holder 32. In the figure, the engaging pin 34 is inserted into the engagement portion 30 to maintain the locked state of the lid 25. If the engaging pin 34 is pulled toward the holder 32, the engaged state of the engagement portion 30 is released, thereby making it possible to operatively open the lid 25 in the direction of the arrow in the figure (toward the outside of the vehicle body). In the embodiment, the locked state as described in the figure is such that the elastic member 31 is retained in an elastically deformed manner. Accordingly, when the locked state is released by the operation of the complex key cylinder unit 50, the lid 25 is automatically opened as being jumped up by the biasing force of the elastic member 31. Incidentally, the holder 32 includes a spring 33 that exerts a biasing force on the engaging pin 34 so as to normally return it to a locked state.

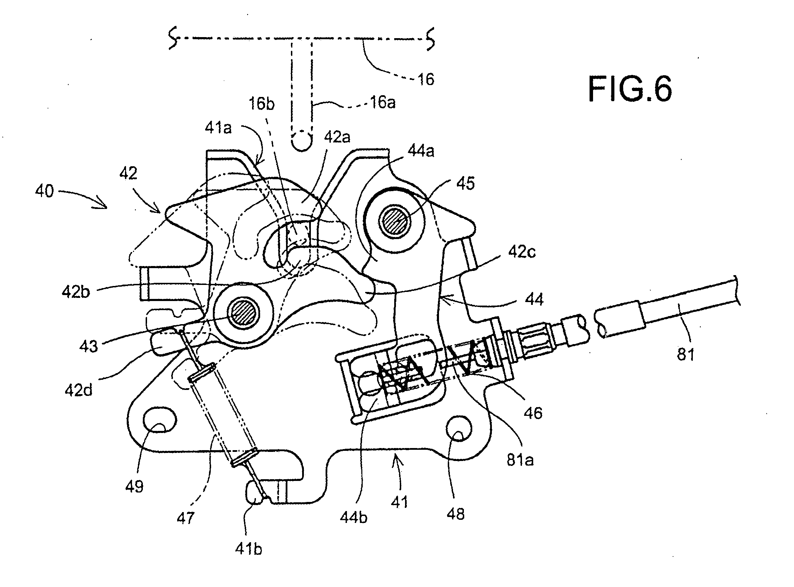

Fig. 6 is a front view of the seat lock structure 40 (see Fig. 1) as an open/close mechanism. The seat lock structure 40 is configured such that a first arm 42, a second arm 44 and the cable 81 are attached to a base plate 41 fixedly supported by the seat frame 9 (see Fig. 1) through attachment holes 48, 49. The first arm 42 is pivotally mounted to the base plate 41 by a pivot shaft 43 and the second arm 44 is pivotally mounted to the base plate 41 by a pivot shaft 45. In the embodiment, the wire 81a incorporated in the cable 81 is connected to the leading end portion 44b of the second arm 44. When the wire 81a is pulled by the operation of the complex key cylinder unit 50, the second arm 44 is turned counterclockwise.

A spring 47 that exerts a biasing force on the first arm 42 so as to normally turn it counterclockwise is spanned between an extension 42d of the first arm 42 and an extension 41b of the base plate 41. The base plate 41 is formed at its upper portion with a groove portion 41a into which the almost-U shaped lock member 16a (see Fig. 1) attached to the back surface of the seat 16 is inserted. When the lock member 16a is inserted into the groove portion 41a along with the closing movement of the seat 16, the cross-section 16b of the lock member 16a turns the first arm 42 clockwise while being put between the upper engagement portion 42a and lower engagement portion 42b of the first arm 42, resulting in the locked state as illustrated in the figure. This locked state is maintained by the engagement of a projecting end 42c of the first arm 42 with a projecting end 44a of the second arm 44, which maintains the locked state of the seat 16.

On the other hand, in order to release the locked state of the seat 16, when the second arm 44 is turned counterclockwise by the operation of the complex key cylinder unit 50, the engagement of the projecting end 42c with the projecting end 44a is released and the second arm 42 is turned counterclockwise by the biasing force of the spring 47. This releases the lock member 16a from the seat lock structure 40. Incidentally, a spring 46 that exerts a biasing force on the wire 81a so as to normally return it to the locked position is disposed at an attachment portion of the wire 81a.

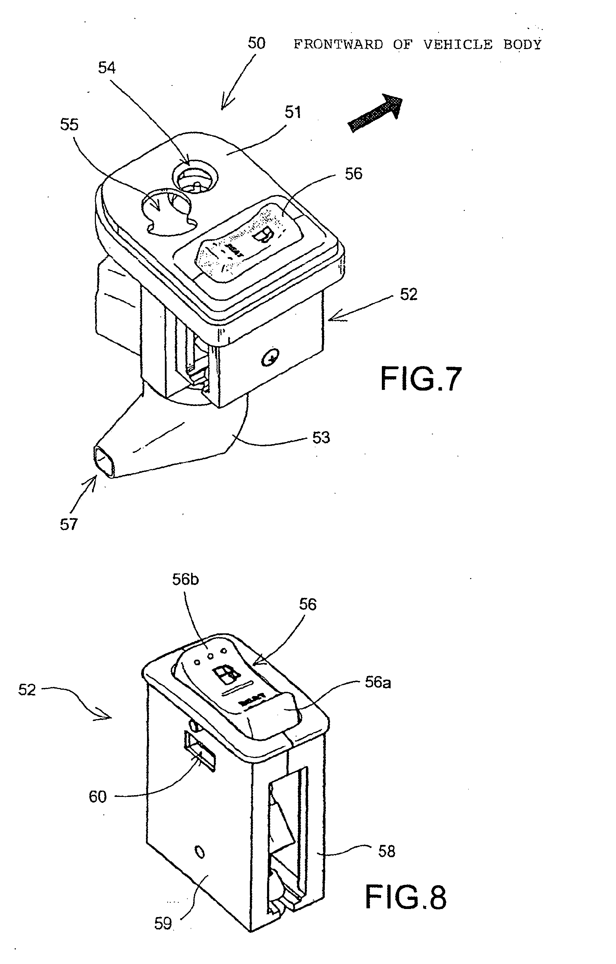

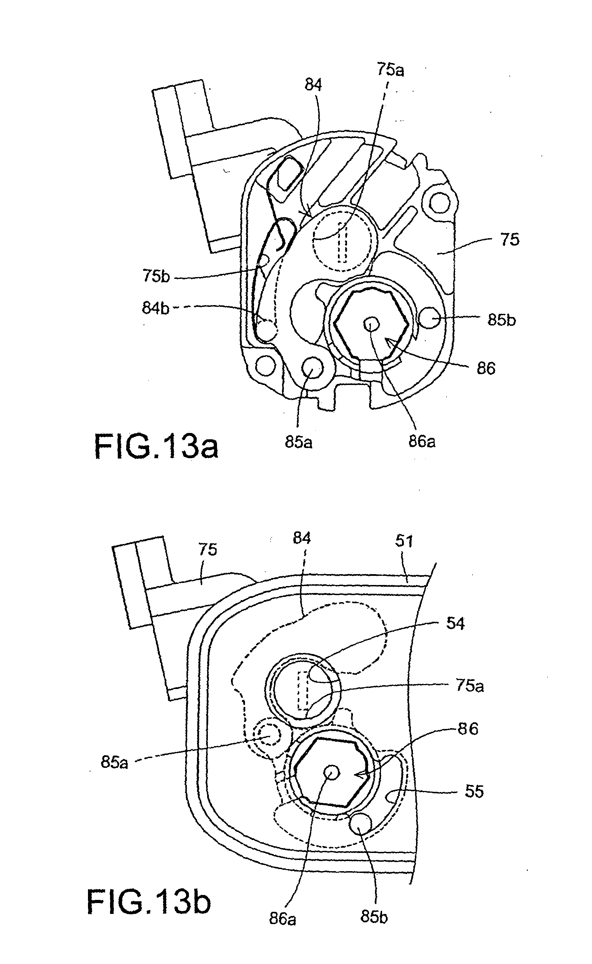

Fig. 7 is a perspective view of the complex key cylinder unit 50 as a vehicular lock device according to an embodiment of the present invention. The complex key cylinder unit 50 is configured as follows. A main key cylinder 53 as a main switch which is operated when the engine is turned on/off and an operation unit 52 as an operating portion having a seesaw-structured switch 56 are arranged adjacently to each other. In addition, the main key cylinder 53 and the operation unit 52 are covered from above by a top cover 51 as a cover member. In the present invention, an operating portion of the main key cylinder 53 and the switch 56 as an operating portion of the operation unit 52 are disposed on substantially the same plane. The top cover 51 is formed with a key hole 54 into which a main key (not shown) is inserted to operate the main key cylinder 53 and with a shutter operating hole 55 used to open or close a shutter (see Fig. 13(a)) blocking the key hole 54. In the complex key cylinder unit 50, the side surface of the main key cylinder 53 is in contact with the widthwise right-hand surface of the head pipe 4 (see Fig. 1). In addition, only the upper portion of the top cover 51 is exposed to the surface of the cover panel 15, so that the main key cylinder 53 and the switch 56 can be operated from the outside of the vehicle body. Incidentally, the main key cylinder 53 is provided at its lower end with an exit hole 57 for various wiring cords.

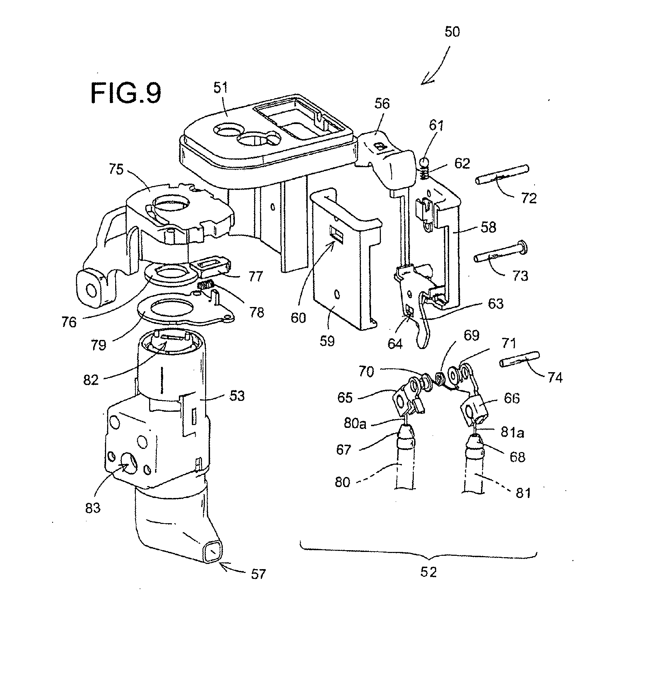

Fig. 8 is a perspective view of the operation unit 52. Like reference numerals denotes like or corresponding portions. The operation unit 52 is configured such that the switch 56 and a plurality of inside parts are put between a right-hand case 58 and a left-hand case 59. The switch 56 is formed with projections 56a, 56b on both ends. When one of the projections 56a, 56b is depressed, the other is raised. In the embodiment, when the projection 56a positioned on the occupant side is depressed in a neutral state illustrated in the figure, the lock of the seat 16 is unlocked. When the projection 56b positioned on the front side is depressed, the lock of the lid 25 is unlocked. Incidentally, the left-hand case 59 is formed with a through-hole 60 into which an operating arm lock pin (see Fig. 9) as a lock pin is inserted.

Fig. 9 is an exploded perspective view illustrating component parts of the complex key cylinder unit 50. Like reference numerals denote like or corresponding portions. The switch 56, a sphere 61 and a spring 62 which provide moderation for the switch 56 during the operation, an operating arm 63 swung by the switch 56, a first driving arm 65 and a second driving arm 66 swung by the operating arm 63 are placed between the right-hand case 58 and the left-hand case 59. The right-hand case 58 and the left-hand case 59 are joined together by shafts 72, 73, 74. The shaft 72 functions as a pivot shaft for the switch 56 and the operating arm 63. The shaft 74 functions as a pivot shaft for the first driving arm 65 and the second driving arm 66.

Spacers 70, 71 and a spring 69 that exerts a biasing force on the first and second driving arms 65, 66 to return them to a neutral position are placed between the first and the second driving arms 65, 66. The wire 80a is coupled to the first driving arm 65 whereas the wire 81a is coupled to the second drive arm 66. Holders 67, 68 which hold ends of the cables 80, 81 at positions below the exposed portions of wires 80a, 81a, respectively, are disposed at the bottom portion of the operating unit 52. As described above, since the operating unit 52 is internally composed of only simple mechanical components, production processes can be reduced as compared with the configuration using an electromagnetic mechanism such as solenoids. The operation of the operating arm 63, the first driving arm 65 and the second driving arm 66 when the switch 56 is operated will be described later.

The main key cylinder 53 is internally provided with a cylinder 82 which can be turned by inserting a main key (not shown) thereinto. Above the cylinder 82 there are provided a base plate 79, a lock cam 76 turned integrally with the cylinder 82, an operating arm lock pin 77 brought into abutment against the lock cam 76, a spring 78 that exerts a biasing force on the operating arm lock pin 77 so as to return it to a desired position, and a lock cam cover 75 fixedly supported by the base plate 79. The operating arm lock pin 77 is configured to project toward the left-hand case 59 when the cylinder 82 is turned to a predetermined position. The operating arm 63 is provided with an engaging hole 64 into which the tip of the operating arm lock pin 77 is inserted. In addition, the tip of operating arm lock pin 77 passes through the through-hole 60 formed in the left-hand case 59 and is inserted into the engaging hole 64.

The main key cylinder 53 houses therein a handlebar lock pin (not shown) which projects from a pin hole 83 when the cylinder 82 is turned to a predetermined position. The main key cylinder 53 is configured as a combination switch in which the key cylinder as a main switch and a handlebar lock device are integrally housed. The handlebar lock pin projecting from the pin hole 83 is inserted into a through-hole (not shown) provided in the side surface of the head pipe 4 (see Fig. 1) and is engaged with an engaging hole formed in the stem shaft. This prohibits the turning operation of the stem shaft, that is, the steering operation of the handlebar 2.

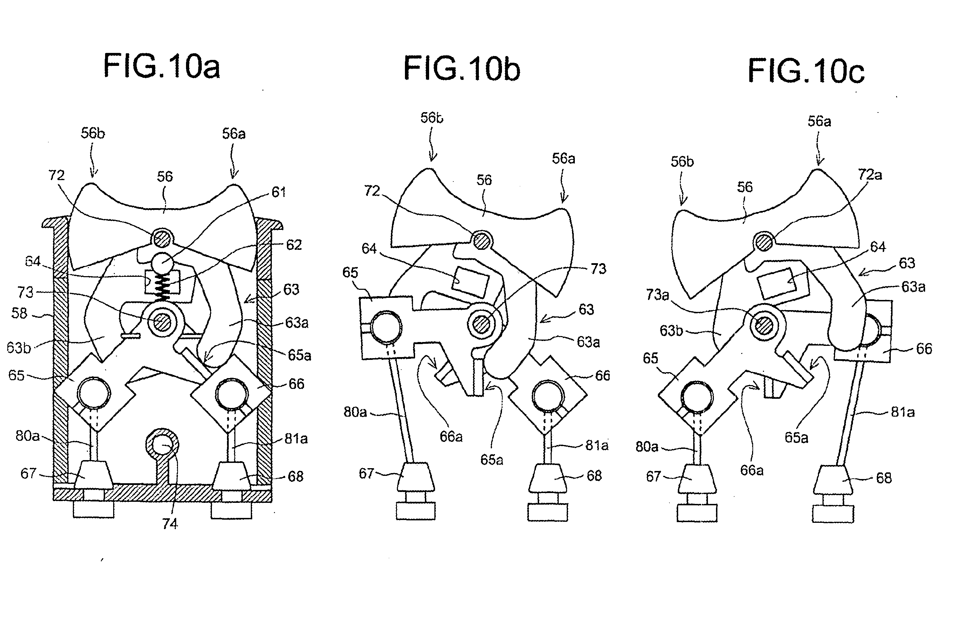

Figs. 10(a), 10(b) and 10(c) are front views illustrating the inside of the operation unit 52. Like reference numerals denote like or corresponding portions. Fig. 10(a) denotes a neutral state where the switch 56 is not operated. The switch 56 is fixedly supported by the operating arm 63 including a right arm 63a and a left arm 63b formed integrally with each other. The first driving arm 65 coupled to the wire 80a is formed with an abutment portion 65a against which the tip of the right arm 63a is abutted. In addition, the second driving arm 66 coupled to the wire 81a is formed with an abutment portion 66a (see Fig. 10(b)) against which the tip of the left arm 63b is abutted. The other end of the wire 80a is connected to the lid lock structure 90 (see Fig. 5) and the other end of the wire 81a is connected to the seat lock structure 40 (see Fig. 6).

Fig. 10(b) is a front view illustrating a state in which the projection 56a of the switch 56 is depressed from above. Like reference numerals denote like or corresponding portions. In the figure, the operating arm 63 is pivotally moved clockwise, so that the tip of the right arm 63a presses the abutment portion 65a, whereby the first driving arm 65 is pivotally moved clockwise. This movement pulls the wire 80a coupled to the first driving arm 65 to release the locked state of the lid 25 (see Fig. 1). In short, the projection 56a functions as a mechanical switch for opening the lid 25.

Fig. 10(c) is a front view illustrating a state in which the projection 56b of the switch 56 is depressed from above. Like reference numerals denote like or corresponding portions. In the figure, the operating arm 63 is pivotally moved counterclockwise, so that the tip of the left arm 63b presses the abutment portion 66a, whereby the second driving arm 66 is pivotally moved counterclockwise. This movement pulls the wire 81a coupled to the second driving arm 66 to release the locked state of the seat 16 (see Fig. 1). In short, the projection 56b functions as a mechanical switch for opening the seat 16.

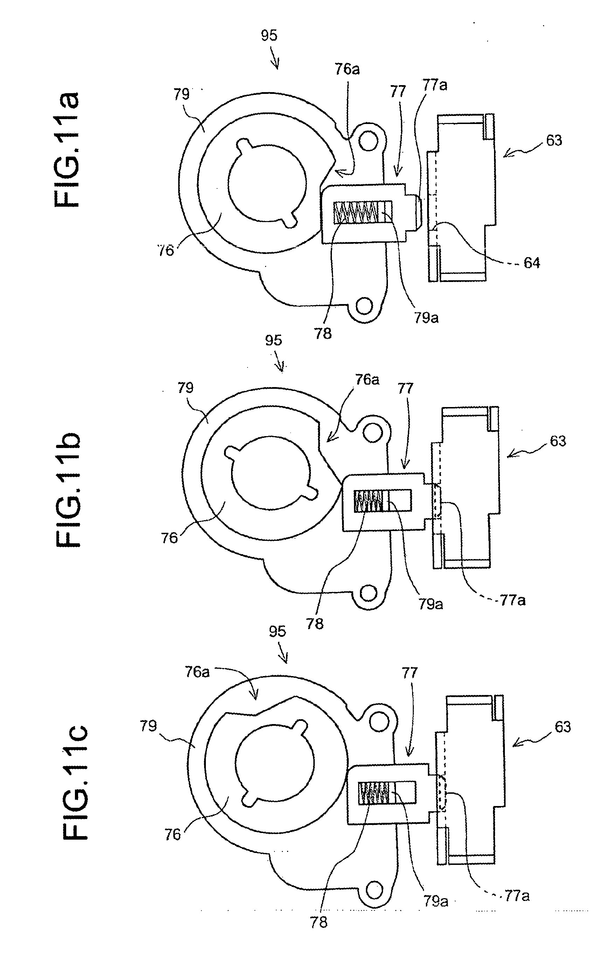

Figs. 11(a), 11(b) and 11(c) are plan views illustrating the relationship between an operating arm lock structure 95 as a lock mechanism and the operating arm 63 with the engaging hole 64. The operating arm lock structure 95 includes the base plate 79, a lock cam 76 having a cam groove 76a, an operating arm lock pin 77 having a leading end 77a, and a spring 78. Like reference numerals denote like or corresponding portions. The operating arm 63 is spaced at a predetermined interval apart from the operating arm lock structure 95 attached above the main key cylinder 53 (see Fig. 9). The operating arm lock pin 77 is linearly slidable in a lateral direction in the figure in accordance with the rotary angle of the lock cam 76. The base plate 79 is provided with a retaining portion 79a adapted to retain the spring 78 between the inner wall of the operating arm lock pin 77 and the retaining portion 79a. A biasing force is exerted on the operating arm lock pin 77 to normally slide it leftward in the figure.

Fig. 11(a) illustrates a state in which the lock cam 76 turned integrally with the cylinder 82 (see Fig. 9) is turned to a position where the operating arm 63 is operable. Like reference numerals denote like or corresponding portions. In the figure, the operating arm lock pin 77 is slidably moved, leftward, to a position in abutment against the cam groove 76a by the biasing force of the spring 78. Therefore, the leading end 77a of the operating arm lock pin 77 is not engaged with the operating arm 63. Thus, the operating arm 63 can be pivotally moved, that is, the locks of the seat 16 and the lid 25 can be operatively unlocked. Incidentally, the cylinder 82 is configured to exhibit functions such as engine-on, engine-off and handlebar-lock when turned to a predetermined position. In the present embodiment, when the cylinder 82 is turned to a position exhibiting a handlebar-locking function as shown in the figure, the switch 56 (see Fig. 7) fixedly supported by the operating arm 63 can be operated. Incidentally, the seat/lid open position may be set in addition to the turning positions exhibiting the above-mentioned functions.

Fig. 11(b) illustrates a state in which the lock cam 76 is turned to a position prohibiting the operation of the operating arm 63. Like reference numerals denote like or corresponding portions. When the lock cam 76 is gradually turned counterclockwise from the state shown in Fig. 11(a), the abutment portion between the lock cam 76 and the operating arm lock pin 77 is dislocated from the cam groove 76a and further moved onto the arcuate outer circumference of the lock cam 76. Along with this movement, the operating arm lock pin 77 is slidably moved rightward in the figure. Then, the leading end 77a of the operating arm lock pin 77 is inserted into the engaging hole 64, thereby prohibiting the pivotal movement of the operating arm 63.

Fig. 11(c) illustrates a state in which the lock cam 76 is further turned counterclockwise from the state shown in Fig. 11(b). Like reference numerals denote like or corresponding portions. Fig. 11(c) also shows a state prohibiting the pivotal movement of the operating arm 63. In this embodiment, the state shown in Fig. 11(c) exhibits the "handlebar-lock" function and the state shown in Fig. 11(b) exhibits the "engine-off" function. However, it can be optionally selected which turned position makes it possible to pivotally move the operating arm 63. It may be set, for example, that the operating arm 63 can be pivotally moved at the positions of "engine-on" and "engine-off". In addition, modifying the shape of the cam groove 76a of the lock cam 76 makes it possible to pivotally move the operating arm 63 at a plurality of turned positions.

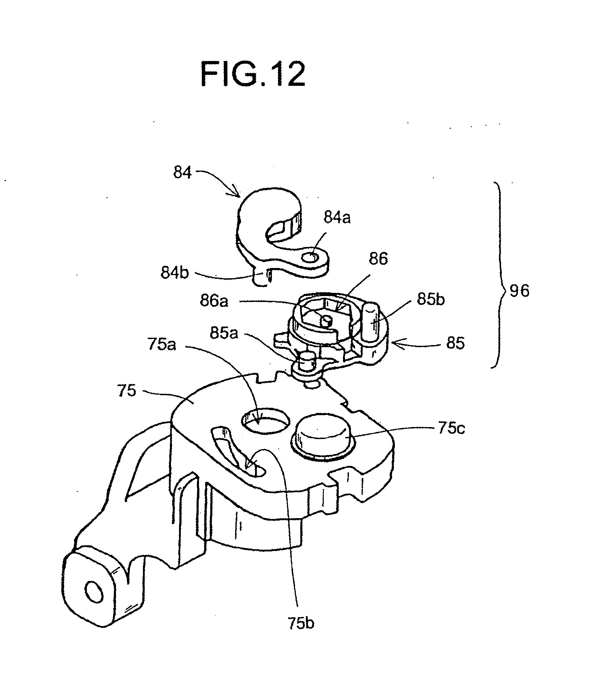

Fig. 12 is an exploded perspective view illustrating the component parts of a shutter mechanism 96 capable of being mounted on the upper portion of the lock cam cover 75 (see Fig. 9). The shutter mechanism 96 includes a shutter 84 and a turning member 85. The shutter mechanism 96 protects the cylinder 82 and the main key cylinder 83 by closing the key hole 54 (see Fig. 7) provided in the top cover 51 when an occupant dismounts from the motorcycle 1. The shutter 84 is formed with an engaging hole 84a and a cylindrical guide 84b. On the other hand, the turning member 85 is formed with a cylindrical engaging shaft 85a, a knob 85b and a hexagonal key groove 86. A cylindrical engaging projection 86a is formed on the bottom of the key groove 86. The lock cam cover 75 is formed with a through-hole 75a into which a main key (not shown) is inserted, a guide groove 75b and a cylindrical engaging shaft 75c. The engaging shaft 75c is engaged with an engaging hole (not shown) formed on the back side of the turning member 85 so as to pivotally support the turning member 85. The engaging shaft 85a engaged with the turning member 85 is engaged with the engaging hole 84a so as to pivotally support the shutter 84. In this case, the guide 84b is engaged with the guide groove 75b.

Figs. 13(a) and 13(b) are plan views illustrating the operating state of the shutter mechanism 96. Like reference numerals denote like or corresponding portions. Fig. 13(a) illustrates a state in which the shutter 84 and the turning member 85 are attached to the lock cam cover 75 and the shutter 84 is closed. In Fig. 13(a), the shutter 84 is moved downward as the turning member 85 is turned counterclockwise, thus shielding the through-hole 75a of the lock cam cover 75. Incidentally, the turning member 85 is provided with a lock mechanism which prohibits its turning movement from the closed state of the figure unless a hexagonal dedicated key (not shown) prepared separately from the main key is abutted against the bottom of the key groove 86.

Fig. 13(b) illustrates a state in which the top cover 51 is additionally attached to the configuration of Fig. 13(a) and the shutter 84 is opened. Like reference numerals denote like or corresponding portions. The dedicated key is abutted against the key groove 86 and the turning member 85 is turned clockwise. This causes the shutter 84 to move upward in the figure with the engaging shaft 85a and the guide 84b engaged in the guide groove 75b (see Fig. 13(a)) serving as axes. At the time of point when the guide 84b comes into contact with the end of the guide groove 75b, the shielded state by the shutter 84 is fully released, that is, the key hole 54 and the through-hole 75a communicate with each other.

Incidentally, the shutter mechanism 96 of the embodiment is configured such that, when the shutter 84 is brought into the closed state from the opened state, the turning member 85 can be turned counterclockwise by use of the knob 85b. Thus, when dismounting from the motorcycle 1, the operator can manually close the shutter 84 without taking out the dedicated key.

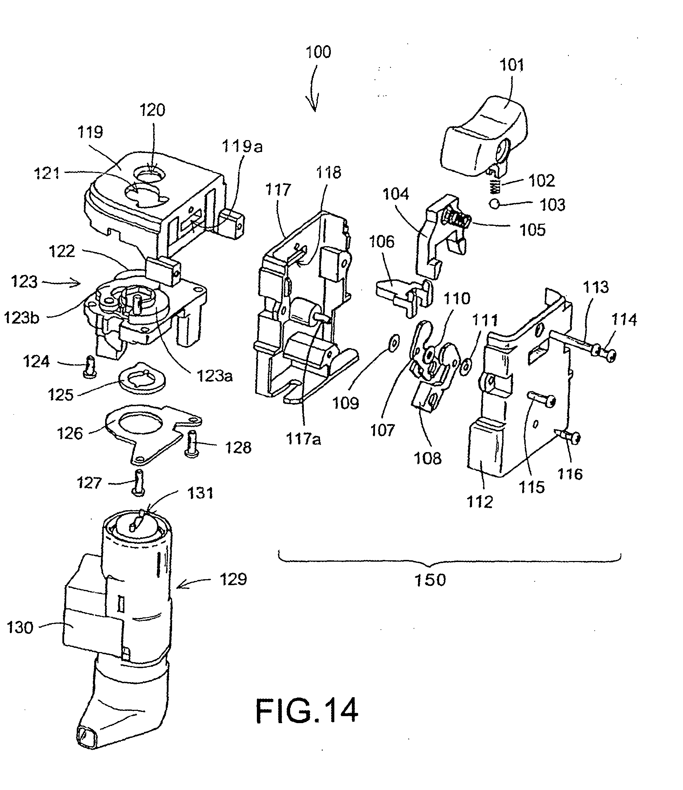

Fig. 14 is an exploded perspective view illustrating the component parts of a complex key cylinder unit 100 as a vehicular lock device according to a second embodiment of the present invention. The second embodiment is different from the first embodiment mainly in the configuration of an operating unit 150 corresponding to the operating unit 52 described above. Between a right-hand case 112 and a left-hand case 117, there are provided a switch 101, a sphere 103 and a spring 102 which provide moderation for the switch 101 during the operation, an operating arm 104 swung by the switch 101, a spring 105 that exerts a biasing force on the operating arm 104 so as to normally move it toward the left-hand case 117, a pressing plate 106 pressing the operating arm 104 toward one side, and a first driving arm 107 and a second driving arm 108 that are swung by the operating arm 104.

The right-hand case 112 and the left-hand case 117 are joined together by shafts 113, 114, 115 and 116. The shaft 113 functions as a pivot shaft for the switch 101 and the operating arm 104. A pivot shaft 117a formed inside the left-hand case 117 functions as a pivot shaft for the first and second driving arms 107 and 108. Washers 109, 110, 111 reducing sliding resistance during pivotal movement are attached to both end faces of the first and second driving arms 107 and 108.

A cylinder 131 capable of being turned by the insertion of a main key (not shown) is internally provided in a main key cylinder 129. Above the cylinder 131 there are provided a base plate 126, a lock cam 125 turned integrally with the cylinder 131, a lock cam cover 122 joined to the base plate 126 by shafts 127, 128, and a top cover 119 formed with a key hole 120 into which the main key is inserted. A shutter mechanism 123 including a turning member 123a and a shutter 123b is attached to the upper surface of the lock cam cover 122. A dedicated key is inserted into a shutter operating hole 121 formed in the top cover 119 for turning the turning member 123a. Thus, the key hole 120 can be arbitrarily opened and closed by means of the shutter 123. One end of the pressing plate 106 can be abutted against the lock cam 125 through a through-hole 118 formed in the left-hand case 117 and a through-hole 119a formed in the top cover 119.

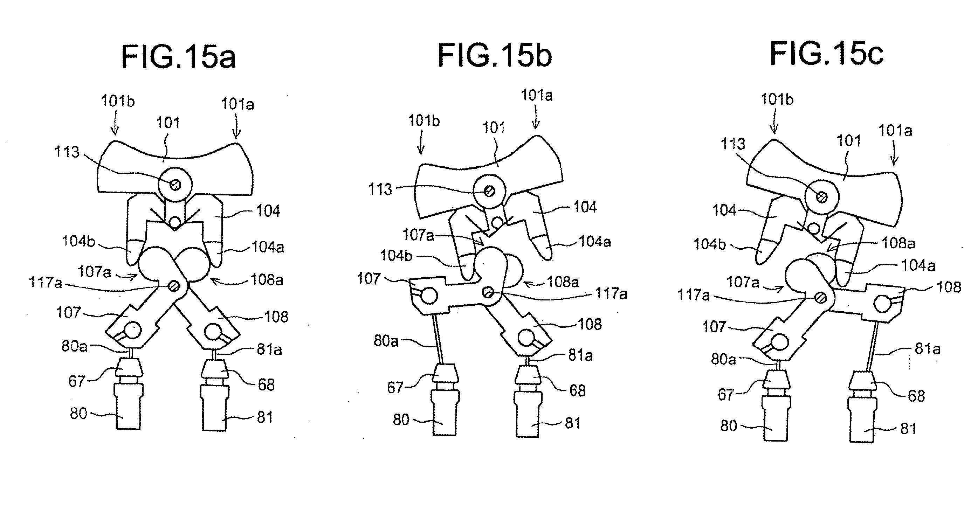

Figs. 15(a), 15(b) and 15(c) are front views illustrating the inside of the operating unit 150. Like reference numerals denote like or corresponding portions. Fig. 15(a) illustrates a neutral state in which the switch 101 is not operated. The switch 101 is fixedly supported by the operating arm 104 including a right arm 104a and a left arm 104b formed integrally with each other. The first driving arm 107 is coupled to one end of the cable 80a and the other end of the cable 80a is coupled to the lid lock structure 90 (see Fig. 5). On the other hand, the second driving arm 108 is coupled to one end of the cable 81a and the other end of the cable 81a is coupled to the seat lock structure 40 (see Fig. 6). The first driving arm 107 is formed with an abutment portion 107a in abutment against the left arm 104b and the second driving arm 108 is formed with an abutment portion 108a in abutment against the right arm 104a. Incidentally, the respective cables 80 and 81 incorporating the wires 80a and 80b are fixedly supported by the bottom of the operating unit 150 by means of the holders 67 and 68, respectively.

Fig. 15(b) is a front view illustrating a state in which a projection 101b of the switch 101 is depressed from above. Like reference numerals denote like or corresponding portions. In the figure, the operating arm 104 is pivotally moved counterclockwise, so that the left arm 104b presses the abutment portion 107a, whereby the first driving arm 107 is pivotally moved clockwise. This movement pulls the wire 80a coupled to the first driving arm 107 to release the locked state of the lid 25 (see Fig. 1).

Fig. 15(c) is a front view illustrating a state in which a projection 101a of the switch 101 is depressed from above. Like reference numerals denote like or corresponding portions. In the figure, the operating arm 104 is pivotally moved clockwise, so that the right arm 104a presses the abutment portion 108a, whereby the second driving arm 108 is pivotally moved counterclockwise. This movement pulls the wire 81a coupled to the second driving arm 108 to release the locked state of the seat 16 (see Fig. 1).

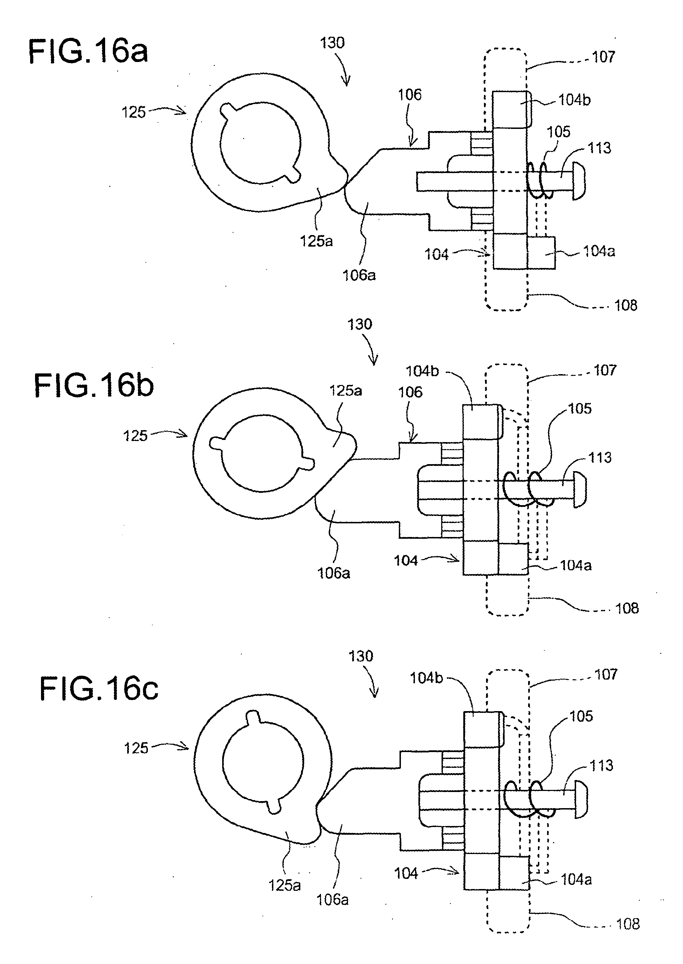

Figs. 16(a), 16(b) and 16(c) are plan views of an engaging-object switching structure 130 as a lock mechanism. The engaging-object switching structure 130 includes a lock cam 125 with a cam lobe 125a, the operating arm 104 pivotally moving the first and second driving arms 107, 108, and the pressing plate 106 abutted against the lock cam 125 and the operating arm 104. Like reference numerals denote like or corresponding portions. The first and second driving arms 107, 108 are each spaced apart at a predetermined interval from the lock cam 125 attached above the main key cylinder 129 (see Fig. 14). The pressing plate 106 and the operating arm 104 are slidably moved leftward and rightward in the figure in accordance with the rotary angle of the lock cam 125. The pressing plate 106 is formed with a desirably shaped leading end 106a. The spring 105 exerts a biasing force on the operating arm 104 to normally slidably move it leftward in the figure.

Fig. 16(a) illustrates a state in which the abutment between the near-apex of the cam lobe 125a and the leading end 106a of the pressing plate 106 slidably move the pressing plate 106 and the operating arm 104 rightward in the figure. In this state the pivotal movement of the operating arm 104 is transmitted to the first and second driving arms 107, 108. That is to say, in this state the operation of the switch 101 can unlock the locks of the seat 16 and the lid 25.

Fig. 16(b) illustrates a state in which turning the lock cam 125 counterclockwise causes the pressing plate 106 and the operating arm 104 to slidably move leftward in the figure. In such a state as shown in the figure, the right arm 104a and left arm 104b of the operating arm 104 are designed not to come into abutment against the abutment portion 108a of the second driving arm 108 and the abutment portion 107a of the first driving arm 107, respectively, in the embodiment. In short, the pivotal movement of the operating arm 104 is not transmitted to the first and second driving arms 107, 108, so that the switch 101 will be operated in vain, that is, the wires 80a, 81a will not be pulled. Thus, the operation of unlocking the locks of the lid 25 and the seat 16 is virtually prohibited.

Fig. 16(c) illustrates a state in which turning the lock cam 125 clockwise from the state of Fig. 16(a) causes the pressing plate 106 and the operating arm 104 to slidably move leftward in the figure. As with the state of Fig. 16(b), also in this state, the operation of unlocking the locks of the lid 25 and the seat 16 is virtually prohibited. Incidentally, also the present embodiment not only provides the turned position of "seat/lid open" for the cylinder 131 but also sets the turned positions having functions of "handlebar lock", "engine-on" and "engine-off" so that the operation of unlocking the locks of the lid 25 and the seat 16 can be allowed. In addition, variation of the shape of the lock cam 125 can provide such setting that operation of unlocking the lock is allowed at a plurality of turned positions.

As described above, according to the vehicular lock device of the present invention, the operating unit for operating the open/close mechanism is integrally attached to the operating device provided with the main key cylinder. Therefore, the opening/closing mechanism can be operated from the vicinity of the main key cylinder, thereby enhancing operability. Since the operating portion of the main key cylinder is separate from the switch swinging the operating arm, erroneous operation can be prevented and the operability can be further enhanced. Furthermore, since the key cylinder, the handlebar lock device and the operating unit are formed integrally with each other, a vehicular lock device can be provided in which a plurality of functions and operating parts are combined into one place.

Incidentally, it is matter of course that the shape of each part constituting the operating unit and the configuration or the like of the open/close mechanism attached to the vehicle are not limited to the embodiments for the seat and lid, and can be modified in various ways.

## Claims

1. A vehicular lock device (50; 100) comprising:
an operating unit (52; 150) for operating a wire-driven open-close mechanism (40; 90) attached to a vehicle (1) wherein the open-close mechanism (40; 90) controls opening operation of an open-close type seat (16) on which an occupant seats, or an open-close type lid (25) covering a filler opening (13a; 14a); and
an operating device (53; 129) including a key cylinder (82; 131) as a main switch;
wherein the operating unit (52; 150) is integrally attached to the operating device (53; 129), and
wherein the opening operation of the open-close type seat (16) or the open-close type lid (25) can be enabled by wire-drive through the operation of the operating unit (52; 150), and
the operating device (53; 129) is a combination switch in which the key cylinder (82; 131) and a handlebar lock device are combined in a single unit, and the operating unit (52; 150) is integrally attached to the combination switch;
**characterized in that**
the operating unit (52; 150) includes an operating arm (63; 104) which is swingable about a pivot shaft (72; 113) in accordance with the operation of the operating unit (52; 150);
the operating arm (63; 104) is configured to enable opening operation of the open-close type seat (16) by being swung toward one side from a neutral state where the operating unit (52; 150) is not operated, and to enable opening operation of the open-close type lid (25) by being swung toward the other side from the neutral state; and **in that**
the vehicular lock device (50; 100) further includes a lock mechanism (95; 130) that prohibits the opening operation of the open-close type seat (16) and the open-close type lid (25) by turning the key cylinder (82; 131) to a predetermined position.

2. The vehicular lock device (50; 100) according to claim 1, wherein an operating portion of the key cylinder (82; 131) and an operating portion (56; 101) of the operating unit (52; 150) are disposed on the same plane or substantially the same plane so as to be adjacent to each other.

3. The vehicular lock device (50) according to claim 1 or 2, wherein the lock mechanism (95) is a mechanism which maintains the operating arm (63) in the neutral state.

4. The vehicular lock device (50) according to claim 3, further comprising:
a cam (76) turnable integrally with the key cylinder (82, 131) and
a lock pin (77) projecting along with the turning of the cam (76);
wherein engagement of the lock pin (77) with an engaging hole (64) provided in the operating arm (63) maintains the operating arm (63) in the neutral state.

5. The vehicular lock device (100) according to claim 1 or 2, wherein the lock mechanism (130) is a mechanism adapted to prohibit the wire-drive even if the operating arm (104) is swung.

6. The vehicular lock device (100) according to claim 5, further comprising:
a driving arm (107, 108) which comes into abutment against a pressing plate (106) to be swung for the wire-drive;
a cam (125) turned integrally with the key cylinder (131);
the pressing plate (106) which is slidably moved along the pivot shaft (113) of the operating arm (104) as the cam (125) is turned;
wherein the pressing plate (106) allows the operating arm (104) to be slidably moved along the pivot shaft (113), which causes no abutment between the operating arm (104) and the driving arm (107, 108) to prohibit the wire-drive.

7. The vehicular lock device (50; 100) according to any one of claims 1 to 6, wherein the predetermined position is a position where handlebar-operation of the vehicle (1) is prohibited by the handlebar lock device.

8. The vehicular lock device (50; 100) according to any one of claims 1 to 7, wherein:
the combination switch is provided with a shutter (84; 123b) which shields a key hole (54; 120) into which a key is inserted to turn the key cylinder (82; 131);
a cover member (51; 119) formed with the key hole (54; 120) is disposed above the shutter (84; 123b); and
the operating unit (52; 150) is attached to the cover member (51; 119).

## Patentansprüche

1. Fahrzeug-Absperrvorrichtung (50; 100), wobei die Absperrvorrichtung umfasst:
eine Betätigungseinheit (52; 150) zum Betätigen eines mit einem Seilantrieb betriebenen AUF/ZU-Mechanismus (40; 90), der an einem Fahrzeug (1) angebracht ist, wobei der AUF/ZU-Mechanismus (40; 90) den Öffnungsvorgang eines AUF/ZU-Sitzes (16), auf dem ein Insasse sitzt, oder eines AUF/ZU-Deckels (25) steuert, der eine Einfüllöffnung (13a; 14a) abdeckt; sowie
eine Betätigungseinrichtung (53; 129), die als Hauptschalter einen Schließzylinder (82; 131) aufweist;
wobei die Betätigungseinheit (52; 150) an der Betätigungseinrichtung (53; 129) integriert angebracht ist, und
wobei der Betätigungsvorgang des AUF/ZU-Sitzes (16) oder des AUF/ZU-Deckels (25) durch die Betätigung der Betätigungseinheit (52: 150) mit einem Seilantrieb in Betrieb gesetzt werden kann, und
die Betätigungseinrichtung (53; 129) aus einem Kombinationsschalter besteht, in dem der Schließzylinder (82; 131) und eine Lenkstangen-Absperreinrichtung in einer einzigen Einheit vereinigt sind, wobei die Betätigungseinheit (52; 150) am Kombinationsschalter integriert angebracht ist;
**dadurch gekennzeichnet, dass**
die Betätigungseinheit (52; 150) einen Betätigungsarm (63; 104 aufweist, der um eine Schwenkwelle (72; 113) in Übereinstimmung mit der Betätigung der Betätigungseinheit (52; 150) verschwenkt werden kann;
der Betätigungsarm (63; 104) so aufgebaut ist, dass ein Öffnungsvorgang für den AUF/ZU-Sitz (16) **dadurch** ermöglicht wird, dass der Arm von einer neutralen Stellung, in der die Betätigungseinheit (52; 150) nicht betätigt wird, zu einer Seite verschwenkt wird, wobei der Öffnungsvorgang des AUF/ZU-Deckels (25) **dadurch** ermöglicht wird, dass der Arm von der neutralen Stellung zur anderen Seite verschwenkt wird; und
die Fahrzeug-Absperrvorrichtung (50; 100) weiters einen Absperrmechanismus (95; 130) aufweist, der den Öffnungsvorgang für den AUF/ZU-Sitz (16) und den AUF/ZU-Deckel (25) **dadurch** verhindert, dass der Schließzylinder (82; 131) in eine vorgegebene Stellung gedreht wird.

2. Fahrzeug-Absperrvorrichtung (50; 100) gemäß Anspruch 1, wobei ein Betätigungsteil des Schließzylinders (82; 131) sowie ein Betätigungsteil (56; 101) der Betätigungseinheit (52; 150) in derselben Ebene oder im Wesentlichen in derselben Ebene so angeordnet sind, dass sie nebeneinander liegen.

3. Fahrzeug-Absperrvorrichtung (50) gemäß Anspruch 1 oder 2, wobei der Absperrmechanismus (95) aus einem Mechanismus besteht, der den Betätigungsarm (63) in der neutralen Stellung hält.

4. Fahrzeug-Absperrvorrichtung (50) gemäß Anspruch 3, wobei die Vorrichtung weiters umfasst:
eine Nocke (76), die integriert mit dem Schließzylinder (82; 131) gedreht werden kann, und
einen Sperrzapfen (77), der zusammen mit der Drehung der Sperrnocke (76) vorspringt;
wobei ein Eingreifen des Sperrzapfens (77) in eine Eingreiföffnung (64), die im Betätigungsarm (63) vorgesehen ist, den Betätigungsarm (63) in der neutralen Stellung hält.

5. Fahrzeug-Absperrvorrichtung (100) gemäß Anspruch 1 oder 2, wobei der Sperrmechanismus (130) aus einem Mechanismus besteht, der so aufgebaut ist, dass er den Seilantrieb verhindert, selbst wenn der Betätigungsarm (104) verschwenkt wird.

6. Fahrzeug-Absperrvorrichtung (100) gemäß Anspruch 5, wobei die Vorrichtung weiters umfasst:
einen Antriebsarm (107, 108), der auf einer Andruckplatte (106) aufliegt, um für den Seilantrieb verschwenkt zu werden;
eine Nocke (125), die integriert mit dem Schließzylinder (131) gedreht wird;
wobei die Andruckplatte (106) entlang der Schwenkwelle (113) des Betätigungsarms (104) verschoben wird, wenn die Nocke (125) gedreht wird;
wobei die Andruckplatte (106) ermöglicht, dass der Betätigungsarm (104) entlang der Schwenkwelle (113) verschoben wird, wodurch der Betätigungsarm (104) nicht mehr am Antriebsarm (107, 108) aufliegt, um den Seilantrieb zu verhindern.

7. Fahrzeug-Absperrvorrichtung (50; 100) gemäß irgendeinem der Ansprüche 1 bis 6, wobei die vorgegebene Stellung eine Stellung ist, in der eine Betätigung der Lenkstange des Fahrzeugs (1) durch die Lenkstangen-Absperreinrichtung verhindert wird.

8. Fahrzeug-Absperrvorrichtung (50; 100) gemäß irgendeinem der Ansprüche 1 bis 7, wobei:
der Kombinationsschalter mit einem Verschluss (84; 123b) versehen ist, der ein Schlüsselloch (54; 120) abdeckt, in das ein Schlüssel eingesteckt wird, um den Schließzylinder (82; 131) zu drehen;
ein Abdeckelement (51; 119), das mit dem Schlüsselloch (54; 120) ausgebildet ist, über dem Verschluss (84; 123b) angeordnet ist; und
die Betätigungseinheit (52; 150) am Abdeckelement (51; 119) angebracht ist.

## Revendications

1. Dispositif de verrouillage pour véhicule (50 ; 100) comprenant :
une unité d'actionnement (52 ; 150) pour actionner un mécanisme d'ouverture et fermeture commandé par câble (40 ; 90) fixé à un véhicule (1), le mécanisme d'ouverture et fermeture (40 ; 90) commandant le fonctionnement d'un siège de type ouverture-fermeture (16) sur lequel s'assoit un occupant, ou d'un couvercle de type ouverture-fermeture (25) qui couvre une ouverture de remplissage (13a ; 14a) ; et
un dispositif d'actionnement (53 ; 129) comprenant un barillet de serrure (82 ; 131) comme interrupteur principal ;
dans lequel l'unité d'actionnement (52 ; 150) est fixée d'un seul tenant au dispositif d'actionnement (53 ; 129), et
dans lequel l'opération d'ouverture du siège de type ouverture-fermeture (16) ou du couvercle de type ouverture-fermeture (25) peut être autorisée par commande par câble via un actionnement de l'unité d'actionnement (52 ; 150), et
le dispositif d'actionnement (53 ; 129) est un interrupteur à combinaison dans lequel le barillet de serrure (82 ; 131) et un dispositif de verrouillage de guidon sont combinés en une seule unité, et l'unité d'actionnement (52 ; 150) est fixée d'un seul tenant à l'interrupteur à combinaison ;
**caractérisé en ce que**
l'unité d'actionnement (52 ; 150) comprend un bras d'actionnement (63 ; 104) qui peut pivoter autour d'un axe de pivotement (72 ; 113) suivant le fonctionnement de l'unité d'actionnement (52 ; 150) ;
le bras d'actionnement (63 ; 104) est configuré pour permettre une opération d'ouverture du siège de type ouverture-fermeture (16) en étant basculé vers un côté à partir d'un état neutre dans lequel l'unité d'actionnement (52 ; 150) n'est pas actionnée, et pour permettre une opération d'ouverture du couvercle de type ouverture-fermeture (25) en étant basculé vers l'autre côté à partir de l'état neutre ; et **en ce que**
le dispositif de verrouillage pour véhicule (50 ; 100) comprend en outre un mécanisme de verrouillage (95 ; 130) qui empêche l'opération d'ouverture du siège de type ouverture-fermeture (16) et du couvercle de type ouverture-fermeture (25) en faisant tourner le barillet de serrure (82 ; 131) jusqu'à une position prédéterminée.

2. Dispositif de verrouillage pour véhicule (50 ; 100) selon la revendication 1, dans lequel une partie d'actionnement du barillet de serrure (82 ; 131) et une partie d'actionnement (56 ; 101) de l'unité d'actionnement (52 ; 150) sont disposées sur le même plan ou substantiellement sur le même plan de façon à être adjacentes entre elles.

3. Dispositif de verrouillage pour véhicule (50) selon la revendication 1 ou 2, dans lequel le mécanisme de verrouillage (95) est un mécanisme qui maintient le bras d'actionnement (63) dans l'état neutre.

4. Dispositif de verrouillage pour véhicule (50) selon la revendication 3, comprenant en outre :
une came (76) pouvant tourner d'un seul tenant avec le barillet de serrure (82 ; 131) et
un ergot de verrouillage (77) faisant saillie au moment de la rotation de la came (76) ;
dans lequel la mise en prise de l'ergot de verrouillage (77) avec un trou de mise en prise (64) prévu dans le bras d'actionnement (63) maintient le bras d'actionnement (63) dans l'état neutre.

5. Dispositif de verrouillage pour véhicule (100) selon la revendication 1 ou 2, dans lequel le mécanisme de verrouillage (130) est un mécanisme qui empêche la commande par câble, même si l'on fait basculer le bras d'actionnement (104).

6. Dispositif de verrouillage pour véhicule (100) selon la revendication 5, comprenant en outre :
un bras d'entraînement (107, 108) qui vient en butée contre une plaque de poussée (106) à faire pivoter pour la commande par câble ;
une came (125) tournée d'un seul tenant avec le barillet de serrure (131) ;
la plaque de poussée (106) qui est déplacée de façon glissante le long de l'axe de pivotement (113) du bras d'actionnement (104) pendant que la came (125) tourne ;
dans lequel la plaque de poussée (106) permet au bras d'actionnement (104) d'être déplacé de façon glissante le long de l'axe de pivotement (113), ce qui ne provoque pas de butée entre le bras d'actionnement (104) et le bras d'entraînement (107, 108) pour empêcher la commande par câble.

7. Dispositif de verrouillage pour véhicule (50 ; 100) selon l'une quelconque des revendications 1 à 6, dans lequel la position prédéterminée est une position dans laquelle la manipulation par le guidon du véhicule (1) est empêchée par le dispositif de verrouillage de guidon.

8. Dispositif de verrouillage pour véhicule (50 ; 100) selon l'une quelconque des revendications 1 à 7, dans lequel :
l'interrupteur à combinaison est pourvu d'un cache (84 ; 123b) qui protège un trou de clé (54 ; 120) dans lequel on insère une clé pour faire tourner le barillet de serrure (82 ; 131) ;
un élément protecteur (51 ; 119) pourvu du trou de clé (54 ; 120) est placé au-dessus du cache (84 ; 123b) ; et
l'unité d'actionnement (52 ; 150) est fixée à l'élément protecteur (51 ; 119).
